(19) Europäisches Patentamt
European Patent Office
Office européen des brevets

(11) Veröffentlichungsnummer : **0 097 910**
**B1**

(12) # EUROPÄISCHE PATENTSCHRIFT

(45) Veröffentlichungstag der Patentschrift : **18.09.85**

(51) Int. Cl.⁴ : **B 01 J 13/02**, B 41 M 5/00

(21) Anmeldenummer : **83106073.6**

(22) Anmeldetag : **22.06.83**

(54) **Mikrokapseln mit Wänden aus Polyadditionsprodukten von wasserunlöslichen Polyaminen mit wasserlöslichen Polyisocyanataddukten, ein Verfahren zu ihrer Herstellung, sowie einige Verwendungen.**

(30) Priorität : **30.06.82 DE 3224454**
**30.06.82 DE 3224456**

(43) Veröffentlichungstag der Anmeldung : **11.01.84 Patentblatt 84/02**

(45) Bekanntmachung des Hinweises auf die Patenterteilung : **18.09.85 Patentblatt 85/38**

(84) Benannte Vertragsstaaten :
**AT BE CH DE FR GB IT LI NL SE**

(56) Entgegenhaltungen :
**FR-A- 2 251 365**

(73) Patentinhaber : **BAYER AG**
**Konzernverwaltung RP Patentabteilung**
**D-5090 Leverkusen 1 Bayerwerk (DE)**

(72) Erfinder : **Dahm, Manfred, Dr.**
**Am Falkenberg 29**
**D-5090 Leverkusen (DE)**
Erfinder : **Weimann, Norbert, Dr.**
**Heymannstrasse 32**
**D-5090 Leverkusen 1 (DE)**
Erfinder : **Nehen, Ulrich, Dr.**
**Rückertstrasse 10**
**D-5090 Leverkusen 1 (DE)**
Erfinder : **Müller, Hanns Peter, Dr.**
**Im Kerberich 6**
**D-5068 Odenthal (DE)**
Erfinder : **Jabs, Gert, Dr.**
**Wingensiefer Kamp 25**
**D-5068 Odenthal (DE)**
Erfinder : **Awater, Albert, Dr.**
**Zum Hahnenberg 54**
**D-5068 Odenthal (DE)**
Erfinder : **Barnes, James Michael**
**Bechhausen 60**
**D-5632 Wermelskirchen (DE)**

**EP 0 097 910 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Man hat bereits Mikrokapseln hergestellt dadurch, daß man Lösungen von einzukapselnden Stoffen (Kernmaterial) und Polyisocyanaten in hydrophoben Lösungsmitteln in Wasser dispergiert, der kontinuierlichen wäßrigen Phase ein darin lösliches Polyamin zusetzt, und an der Grenzfläche der dispergierten Tröpfchen aus Polyisocyanat und Polyamin einen Polyharnstoff erzeugt. Diese Methode der Mikroverkapselung durch Grenzflächenpolyaddition ist nur anwendbar, wenn das Kernmaterial gegenüber Polyisocyanat inert ist, und wenn ein wasserlösliches Polyamin benutzt werden kann. Mit Polyisocyanat reagierende Stoffe, z. B. Polyamin selbst, können so nicht verkapselt werden. Auch wasserunlösliche Polyamine sind für diese Methode unbrauchbar (DE-A-2 251 381).

Gegenstand dieser Erfindung sind nun Mikrokapseln mit hydrophobem Kern und Kapselwänden, die durch Reaktion von wasserlöslichen Polyisocyanataddukten mit wasserunlöslichen Polyaminen entstanden sind. Ein weiterer Gegenstand der Erfindung ist ein Verfahren zur Herstellung von Mikrokapseln, das dadurch gekennzeichnet ist, daß man eine Mischung aus einem hydrophoben Kernmaterial und wasserunlöslichen Polyaminen in Wasser oder einer wäßrigen Schutzkolloidlösung bis auf die gewünschte Teilchengröße emulgiert, wasserlösliche Bisulfitaddukte von Polyisocyanaten in Form von Pulver oder wäßrigen Lösungen zugibt und das Gemisch bei Temperaturen von 1 bis 140 °C ausreagieren läßt. Das erfindungsgemäße Kernmaterial kann aus dem kapselwandbildenden Polyamin alleine bestehen, es kann daneben ein Lösungsmittel oder einen Wirkstoff oder beides enthalten. Enthält das Kernmaterial nur Polyamin, dann wird nur ein Teil zur Kapselwandbildung verbraucht, so daß der Kapselinhalt ebenfalls Polyamin ist, enthält das Kernmaterial neben Polyamin noch Lösungsmittel und/oder Wirkstoff, dann kann das Polyamin vollständig zur Kapselwandbildung verbraucht werden, und die Kapseln enthalten folglich einen Wirkstoff, ein Lösungsmittel oder beides. Je nach Kapselinhalt können die Mikrokapseln verwendet werden, beispielsweise als Farbstoffvorläufer enthaltende Mikrokapseln in Reaktionsdurchschreibepapieren, als Flammschutzmittel oder Treibmittel oder Katalysatoren enthaltende Mikrokapseln bei der Herstellung von Polymeren, oder als Lösungsmittel enthaltende Mikrokapseln bei der Reaktivierung von Klebstoffen, sowie als Farbstoffe oder Pigmente enthaltende Mikrokapseln als Toner in Kopiersystemen, und letztlich als Aktivkohle enthaltende Mikrokapseln zur Verwendung in absorbierenden Systemen aller Art.

Die Durchmesser der Kapseln können einen Bereich von 0,2 µm bis über 2 000 µm umfassen, bevorzugt bis 2 000 µm. Für die Anwendung als Farbgeber enthaltende Kapseln für Reaktionsdurchschreibepapiere sind Kapselverteilungen mit Medianwerten zwischen 3 und 10 µm bevorzugt. Liegen kleinere Kapseln in Form von Agglomeraten oder Träubchen vor, so sind entsprechende Verteilungen der Agglomerate mit Medianwerten von 3 bis 10 µm Durchmesser bevorzugt.

Bei verkapselten Reaktionskomponenten oder Katalysatoren liegen die bevorzugten Medianwerte der Kapselverteilungen zwischen 3 und 20 µm Durchmesser, weil beispielsweise nur damit eine hinreichend homogene Verteilung der Wirkstoffe in den ausreagierenden Formkörpern erreicht werden kann.

Für spezielle Anwendungen können auch größere Kapseln von Interesse sein, besonders dann, wenn die Freisetzung der Wirkstoffe großflächig oder im gesamten Volumen durch mechanische Zerstörung der Kapselwände in Frage kommt, z. B. beim Extrudieren oder Mischen unter hoher Scherung oder z. B. bei ausgetrockneten reaktivierbaren Klebstoffschichten, in denen mikroverkapselte Lösungsmittel eingelagert sind, die bei Zerstörung der Kapselwände durch Druck den Klebstoff anlösen und wieder klebefähig machen. Für solche Systeme sind Kapseldurchmesser zwischen 100 und 1 000 µm bevorzugt und zwischen 300 und 500 µm besonders bevorzugt.

Die Wandanteile der Wirkstoff enthaltenden Mikrokapseln lassen sich fast beliebig hoch einstellen. Je nach Anwendungszweck wird man höhere Wandanteile wählen, wenn z. B. besonders hohe Dichtigkeit der Kapseln oder hohe Lagerstabilität von Mischungen mit Mikrokapseln zur Formkörperherstellung vorliegen oder niedrigere Anteile, wenn z. B. bei mechanischer Zerstörung der Kapseln der Druck zur vollständigen Freisetzung der Kapselinhalte bestimmte Werte nicht übersteigen kann oder darf.

Eine Erhöhung der Stabilität der Kapseln wurde mit ansteigendem Kapselwandanteil von 9 % bis etwa 50 % beobachtet. Darüber hinausgehende Kapselwandanteile sind im Prinzip möglich, aber im allgemeinen nicht erwünscht.

Die erfindungsgemäßen Mikrokapseln werden hergestellt, indem man eine Mischung aus wasserunlöslichen Substanzen und wasserunlöslichen Polyaminen in Wasser oder gegebenenfalls in einer wäßrigen Schutzkolloidlösung bis auf die gewünschte Teilchengröße emulgiert, wasserlösliche Bisulfitaddukte von Polyisocyanaten in Form von Pulvern oder wäßrigen Lösungen zugibt und anschließend bei Temperaturen von 1 bis 140 °C die umsetzung durchführt.

Das Schutzkolloid ist in der wäßrigen Phase in geringen Mengen vorhanden, vorzugsweise in einer Konzentration von 0,01 % bis 2 %, insbesondere im Konzentrationsbereich von 0,25 %. Gegebenenfalls können zusätzliche Verdicker zur Sedimentationsstabilisierung im gleichen Mengenbereich wie das Schutzkolloid anwesend sein. Auf folgendes sei jedoch hingewiesen : Schutzkolloide, die eine Rekombination von Tröpfchen bei der Emulgierung und die Agglomeration der gebildeten Mikrokapseln verhindern und Verdicker zur Sedimentationsstabilisierung sind in ihrem Wirkungsbereich nicht

eindeutig abzugrenzen. Stets tritt bei Schutzkolloiden auch eine gewisse Sedimentationsstabilisierung auf, während Verdicker vielfach auch deutliche Schutzkolloidwirkung zeigen. Geeignete Schutzkolloide sind beispielsweise : Polyvinylalkohol, Carboxymethylcellulose, Gummiarabicum. Geeignete Verdicker sind beispielsweise Alginate, Xanthane.

Die ölige Phase der Ol-in-Wasser-Emulsion kann 0,5 bis 50 Gew.-%, bevorzugt 15 bis 45 Gew.-%, insbesondere 30 bis 40 Gew.-%, betragen.

Die Emulsion wird hergestellt, indem die Mischung aus der wasserunlöslichen Substanz und dem Polyamin oder dem Polyamingemisch im flüssigen oder schmelzflüssigen Zustand unter Rühren in die gegebenenfalls erwärmte Vorlage gegeben wird.

Besitzt die Mischung aus wasserunlöslicher Substanz und Polyamin einen Schmelzpunkt oberhalb der Raumtemperatur, so kann der Emulgiervorgang aufgeteilt werden in eine Formgebung, z. B. durch Sprühen aus der Schmelze oder durch Mahlung und einer Dispergierung des feinteiligen Gutes in die wäßrige Vorlage. Zur Kapselwandbildung muß bis zum Schmelzpunkt des reagierenden Polyamins erwärmt werden.

Zur Emulgierung können handelsübliche Geräte wir Laborrührer, Propellerrührer oder nach dem Rotor-Statorprinzip arbeitende Mischaggregate wie z. B. Mischsirenen eingesetzt werden. Es kommt bei der Emulgierung nicht so sehr auf die hohe Scherwirkung wie auf eine gute Durchmischung an. Es ist typisch für die erfindungsgemäß eingesetzten Amine, daß sie sich auch in Mischung mit anderen wasserunlöslichen Substanzen sehr leicht emulgieren lassen. In kleinen Gefäßen genügt oft bereits ein kräftiges Schütteln zur Herstellung einer Emulsion (Tensidwirkung wasserunlöslicher Polyamine).

Sollten die Bisulfitaddukte von Polyisocyanaten in Form wäßriger Lösungen zugegeben werden, beträgt deren Konzentration 0,5 bis 80 Gew.-%, bevorzugt 10 bis 60 Gew.-%, insbesondere 20 bis 45 Gew.-%.

Die ölige Phase der Emulsion muß mindestens die zur Verkapselung nötige Menge Polyamin enthalten. Bezogen auf das Polyamin wird soviel Bisulfitaddukt eingesetzt, daß sich aus dem Umsatz der Polyamine mit dem verkappten Polyisocyanat der gewünschte Wandanteil ergibt, wobei mit dem Umsatz der $NH_2$-Gruppen des Amins mit den (verkappten)-NCO-Gruppen des Polyisocyanates im Molverhältnis 1 : 1 gerechnet wird.

Soll das Polyamin vollständig abreagieren, so muß die entsprechende stöchiometrische Menge Bisulfitaddukt eingesetzt werden. Zur Beschleunigung des vollständigen Aminumsatzes empfiehlt sich, die Menge an Bisulfitaddukt 5 bis 20 % höher als den stöchiometrischen Wert einzusetzen.

Soll ein Teil des Polyamins im Kapselkern zurückbleiben, so ist unter Berücksichtigung des gewünschten Wandanteils entsprechend weniger Bisulfitaddukt einzusetzen.

Gewünschte Wandanteile sind 5 bis 64 Gew.-%, bevorzugt 8 bis 40 Gew.-%, besonders bevorzugt 10 bis 12 Gew.-%. Die Umsetzung der Komponenten zur Kapselwandbildung geschieht bei Temperaturen von 1 bis 140 °C .

Bei Bisulfitaddukten von aromatischen Polyisocyanaten sind Temperaturen von 1 bis 100 °C bevorzugt und von 20 bis 40 °C besonders bevorzugt.

Bei Bisulfitaddukten von aliphatischen Polyisocyanaten sind Temperaturen von 50 bis 140 °C bevorzugt und von 70 bis 98 °C besonders bevorzugt.

Mit steigender Temperatur erfolgt eine immer schnellere, spontane (ohne Gegenwart von Amin) Rückspaltung der Bisulfitaddukte. Werden Lösungen von Bisulfitaddukten vor dem Vermischen mit der Polyaminemulsion erwärmt, so dürfen die Lösungen nur eine begrenzte Zeit bei höheren Temperaturen gehalten werden. Die Zeiten und Temperaturen, innerhalb derer etwa 5 % zweier Bisulitaddukte rückspalten, sind in Tabele I angegeben.

Tabelle I

| T | Addukt gemäß Beispiel 2 | Addukt gemäß Beispiel 12 |
|---|---|---|
| 20 °C | unbegrenzt | 2 Stunden |
| 50 °C | 50 Stunden | 30 Minuten |
| 80 °C | 10 Stunden | 8 Minuten |
| 100 °C | 120 Minuten | 1 Minute |
| 120 °C | 30 Minuten | 10 Sekunden |
| 130 °C | 8 Minuten | - |
| 140 °C | 2 Minuten | - |

Die zur Kapselwandbildung eingesetzten Polyamine sind wasserunlöslich. Als wasserunlöslich im Sinne der Erfindung werden Polyamine verstanden, die sich in der wäßrigen Phase zu weniger als 2 %, bevorzugt weniger als 1 ‰ lösen. Als Polyamine werden Amine bezeichnet, die mindestens 2 primäre Aminogruppen aufweisen. Polyamine mit Schmelzpunkten über der Raumtemperatur werden in der zu verkapselnden wasserunlöslichen Substanz, gegebenenfalls bei erhöhter Temperatur, gelöst oder bis zu einem gemeinsamen Schmelzpunkt erwärmt. Die Emulgierung sollte in erwärmtem Wasser oberhalb der gemeinsamen Lösungs- oder Schmelztemperatur erfolgen, gegebenenfalls unter Überdruck falls die Lösungs- oder Schmeltztemperatur im Bereich der Siedetemperatur des Wassers oder darüber liegt.

Als Polyamin werden bevorzugt Diamine eingesetzt.

Erfindungsgemäß geeignete aliphatische Diamine sind beispielsweise 1,11-Undecamethylendiamin, 1,12-Dodecamethylendiamin sowie deren Gemische und Isomere, Perhydro-2,4'- und 4,4'-diaminodiphenylmethan, p-Xylylendiamin, Diamino-perhydroanthrazene (DE-Offenlegungsschrift 2 638 731). Auch Säuredihydrazide kommen erfindungsgemäß in Betracht, z. B. Osalsäuredihydrazid, die Dihydrazide von Malonsäure, Bernsteinsäure, Glutarsäure, Adipinsäure, β-Methyladipinsäure, Sebazinsäure und Terephthalsäure.

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Ethergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, 4,4'-Diaminodiphenylmethan, 4,4'-Diaminodiphenyldisulfide (DE-Offenlegungsschrift 2 404 976), Diaminodiphenyldithioether (DE-Offenlegungsschrift 2 509 404), durch Alkylthiogruppen substituierte aromatische Diamine (DE-Offenlegungsschrift 2 638 760), sowie die in der DE-Offenlegungsschrift 2 635 400 aufgeführten wasserunlöslichen hochschmelzenden Diamine genannt.

Ethylenglykol-bis-(p-aminobenzoesäureester),

2,2'-Diaminoazobenzol,
3,3'-Diaminoazobenzol,
4,4'-Diaminoazobenzol,
2,3-Diaminobenzoesäure,
2,5-Diaminobenzoesäure,
2,2'-Diaminobenzophenon,
4,4'-Diaminobenzophenon,
4,4'-Diaminostilben,
2,2'-Diaminostilben,
4,4'-Diaminotriphenylmethan,
Naphthylendiamin-1,5,
Naphthylendiamin-2,6,
Naphthylendiamin-2,7,
1,2-Diaminoanthrachinon,
1,5-Diaminoanthrachinon,
1,4-Diaminoanthrachinon,
2,6-Diaminoanthrachinon,
3,6-Diaminoacridin,
4,5-Diaminoacenaphthen,
4,4'-Diaminodiphenylether,
3,3'-Diaminodiphenylsulfon,
3,3'-Dimethoxybenzidin,
4,4'-Diaminodiphenylsulfon,
2,3-Diaminofluoren,
2,5-Diaminofluoren,
2,7-Diaminofluoren,
9,10-Diaminophenanthren,
3,6-Diaminodurol,
p-Xylylen-bis-(o-aminothiophenyl)ether,
4,3'-Diamino-4'-chlorobenzanilid,
4,2'-Diamino-4'-chlorobenzanilid,
4-Chlor-3,5-diaminobenzoesäureethylester,
4-Chlor-3-aminobenzoesäure-(4-chlor-3-amino-phenylester),
4-Chlor-3-aminobenzoesäure-(3-chlor-4-amino-phenylester),
4-Aminobenzoesäure-(3-chlor-4-amino-phenylester),
Bernsteinsäure-di-(3-chlor-4-amino)-phenylester,
Ethylenglykol-bis-(4-chlor-3-amino)-benzoesäureester,

3,3'-Dichlor-4,4'-diaminodiphenylcarbonat,
4,4'-Dichlor-3,3'-diaminodiphenylcarbonat,
4-Methyl-3,5-diaminobenzoesäureethylester,
3,5-Diaminobenzoesäuremethylester,
4,4'-Diamino-diphenylmethan-3,3'-dicarbonsäure-dimethylester.

Beispiele für aliphatisch-aromatische Diamine sind die Aminoalkylthioaniline gemäß DE-Offenlegungsschrift 2 734 574.

Zusätzliche Diamine, die erfindungsgemäß besonders bevorzugt sind :

aliphatische Diamine

Trans, trans-4,4'-Diamino-dicyclohexylmethan ;
zweifach amino-methyliertes Cyclododecan ;
Bis-(6-Amino-n-hexylcarbaminsäure)dipropylenglykoldiester ;

aromatische Diamine

Diethyltoluylendiamin ;
3,5-Diethyl-3',5'-diisopropyl-4,4'-diamino-diphenylmethan ;
3,3',5,5'-Tetraisopropyl-4,4'-diamino-diphenylmethan ;
3,3',5,5'-Tetraethyl-4,4'-diamino-diphenylmethan und Gemische dieser Verbindungen ;

Diphenylmethan-3,3'-dithiomethyl-4,4'-diamin ;
3,3'-Carboxyethyl-4,4'-diamino-diphenylmethan ;

Dichlorierte 1,3-Phenylendiamine ;
Triisopropyliertes 1,3-Phenylendiamin ;
3,5-Diamino-4-chlor-benzoesäureisobutylester ;
3,5-Diamino-4-methyl-benzoesäureisobutylester ;
Bis-(4-amino-benzoesäure)-1,3-propandioldiester ;
Bis-(4-amino-benzoesäure)-1,3-(2-ethyl)-propandioldiester ;
Naphthylen-1,5-diamin.

Die neben Polyaminen eingesetzten Kernmaterialien sind ebenfalls wasserunlöslich und weisen die für die Polyamine bereits genannte Wasserunlöslichkeit auf. Die einzukapselnden Kernmaterialien müssen gegenüber primären Aminogruppen inert sein. Das wandbildende Polyamin muß mie dem Kernmaterial, sofern dieses als Flüssigkeit bzw. als Schmelze vorliegt, mischbar sein. Das Polyamin kan gemeinsam mit anderen Kernmaterialien selbst Bestandteil des Kapselinneren sein. Schließlich können feindisperse Festkörper im Kapselkern dispergiert vorliegen.

Folgende wasserunlösliche Substanzen können eingesetzt werden :

Alle nicht mit Wasser mischbaren Löslungsmittel, welche für Durchschreibepapiere geeignete Farbstoffvorläufer lösen.

Beispiele sind chlorierte Diphenyle, Dodecylbenzol, Gemische aus teilhydrierten und nicht-hydrierten Terphenylen, Isopropyldiphenyl, Diisopropylbenzol, Benzoesäureethylester, Gemische aus Diphenyl und Diphenylether, Phthalsäuredibutylester, Aralkyl- oder Diarylether, die Xylole oder handelsübliche in den Aromatisierungsanlagen der Petrochemie und Erdölchemie anfallenden Aromatengemische. Ferner chloriertes paraffin, Baumwollsamenöl, Erdnußöl, Siliconöl, Trikresylphosphat, Monochlorbenzol, alkylierte Diphenyle, alkylierte Naphthaline, höher alkyliertes Benzol.

Häufig werden den Lösungsmitteln Verdünnungsmittel zugesetzt, wie beispielsweise Kerosin, n-Paraffine, Isoparaffine.

Die Verdünnungsmittel können sowohl separat als auch in Mischung mit den genannten Lösungsmitteln verkapselt werden.

Bevorzugt können nach den genannten Verfahren Lösungen von Farbstoffvorläufern in den genannten Lösungsmitteln, sogenannten Farbgeberlösungen verkapselt werden.

Beispiele für Farbstoffvorläufer sind Triphenylmethanverbindungen, Diphenylmethanverbindungen, Xanthenverbindungen, Thiazinverbindungen, Spiropyranverbindungen.

Insbesondere sind geeignet Triphenylmethanverbindungen : 3,3-Bis-(p-dimethylaminophenyl)-6-dimethylaminophthalid und 3,3-Bis-(p-dimethylaminophenyl)-phthalid (« Malachitgrünlacton ») ; Diphenylmethanverbindungen : 4,4'-Bis-dimethylaminobenzhydrylbenzylether, N-Halogenphenylleucolamin, N-ß-Naphthylleucolamin, N-2,4,5-Trichlorphenylleucolamin, N-2,4-Dichlorphenylleucolamin ; Xanthenverbindungen : Rhodamin-ß-anilinolactam, Rhodamin-ß-(p-nitroanilin)-lactam, Rhodamin-ß-(p-chloranilin)-lactam, 7-Dimethyl-amin-2-methoxyfluoran, 7-Diethylamin-3-methoxyfluoran, 7-Diethylamin-3-methylfluoran, 7-Diethylamin-3-chlorfluoran, 7-Diethylamin-3-chlor-2-methylfluoran, 7-Diethylamin-2,4-dimethylfluoran, 7-Diethylamin-2,3-dimethylfluoran, 7-Diethyl-amin-3-methylfluoran, 3,7-Diethylaminfluoran, 7-Diethylamino-3-(dibenzylamin)-fluoran, 7-Diethylamin-3-(methylbenzylamin)-fluoran, 7-Diethylamin-3-(chlorethylmethylamino)-fluoran, 7-Diethylamin-3-(dichlorethylamin)-fluoran, 7-Diethylamin-3-(diethylamin)-fluoran ; Thiazinverbindungen : N-Benzoylleucomethylenblau, o-Chlorbenzoylleucomethylenblau, p-Nitrolbenzoylleucomethylenblau ; Spiroverbindungen : 3-Methyl-2,2'-spirobis-(benzo(f)-chromen).

Ferner können verkapselt werden :

Niedrigsiedende Flüssigkeiten, die als Treibmitel verwendet werden können, wie z. B. Methylenchlorid, Chloroform oder Frigene.

Wasserunlösliche Alkohole, wasserunlösliche Katalysatoren, insbesondere solche mit sekundären oder tertiären Aminogruppen, wasserunlösliche, reaktionsträge Monoamine.

Wasser, gebunden in wasserunlöslichen Hydraten, wie sie von zahlreichen wasserunlöslichen Polyaminen gebildet werden.

Feindisperse Festkörper, dispergiert in flüssigem oder schmelzflüssigem Polyamin und/oder Lösungsmitteln.

Solche Festkörper können sein : wasserunlösliche Minerale, Metalloxide oder Metalle wie z. B. Quarz, Kreide, Bauxit, Eisenoxide, Nickel, Kupfer, anorganische Pigmente oder andere organische Feststoffe wie z. B. Aktivkohle oder organische Pigmente.

Als einzukapselndes Material können auch die zur Kapselwandbildung eingesetzten Polyamine selbst dienen. In diesem Falle wird 5 bis 64 Gew.-%, bevorzugt 8 bis 40 Gew.-%, des Polyamins zur Kapselwandbildung verbraucht und der Rest bleibt als Kapselinhalt erhalten.

Vor der Emulgierung in der wäßrigen Phase werden die zu verkapselnden Substanzen mit den Polyaminen in üblicher Weise gemischt und dann gemeinsam in der wäßrigen Phase emulgiert.

Der Anteil Polyamin in der dispersen Phase vor der Kapselwandbildung beträgt 1-95 Gew.-%, bevorzugt 3-50 Gew.-%, besonders bevorzugt 5-13 Gew.-%.

Die eingesetzten Bisulfitaddukte von Polyisocyanaten sind wasserlöslich, wobei unter Wasserlöslichkeit eine klare, wäßrige Lösung verstanden wird, die in 100 ml zwischen 0,5 g und 80 g Bisulfitaddukt enthält. Bevorzugt ist ein Gehalt von 20 bis 40 g pro 100 ml. Die Polyisocyanate sind aliphatisch oder aromatisch und weisen mindestens 2 Isocyanatgruppen auf.

Als Bisulfitaddukte sind praktisch alle bekannten aliphatischen und aromatischen Polyisocyanate einsetzbar, soweit sie hinreichende Wasserlöslichkeit zeigen. Es können neben den reinen Produkten auch Mischungen von Bisulfitaddukten verschiedener Isocyanate, als auch Bisulfitaddukte von Polyisocyanatmischungen eingesetzt werden. Die Polyisocyanate in den Mischungen können unterschiedliche Mengen Isocyanatgruppen besitzen, üblich sind bi- und trifunktionelle Moleküle. Während die Bilsulfitaddukte der aliphatischen Polyisocyanate als wäßrige Lösungen oder Pulver eingesetzt werden, ist es bei Bisulfitaddukten von aromatischen Polyisocyanaten zweckmäßig, ein Pulver herzustellen, welches unmittelbar vor der Mikrokapselbildung im slurry gelöst wird. Es ist im allgemeinen gleichgültig, welches Kation des Bisulfitadduktes gewählt wird, üblich sind Natrium-, Kalium- und Ammonium-Ionen. In Grenzfällen der Wasserlöslichkeit wird man das Bisulfitaddukt mit der besten Wasserlöslichkeit, im allgemeinen Natrium-Salz, wählen.

Als wasserlösliche Bisulfitaddukte sind die leicht zugänglichen Addukte von aliphatischen Polyisocyanaten bevorzugt. Sie können in pulvriger Form oder als wäßrige Lösungen eingesetzt werden.

Die Rückspaltung der Bisulfitaddukte mit aliphatischen Polyisocyanaten erfolgt in merklichen Umsätzen erst bei erhöhten Temperaturen. Die Kapselbildung wird erheblich beschleunigt, wenn man den slurry auf 50 °C bis 90 °C erwärmt. Im allgemeinen erfolgt in diesem Temperaturbereich die Bildung stabiler Mikrokapseln in hinreichend kurzer Zeit. Für die technische Mikroverkapselung, besonders wenn diese in kontinuierlicher Weise erfilgt, ist es zweckmäßig, mit Überdruck bei Temperaturen über 100 °C zu arbeiten und dadurch eine entsprechende Beschleunigung des Verkapselungsvorganges zu erreichen.

Wasserlösliche Bisulfitaddukte von aromatischen Polyisocyanaten sind ebenfalls einsetzbar. Eines Kapselbildung gelingt bereits bei Raumtemperatur mit hinreichender Geschwindigkeit, so daß sich eine Umsetzung bei erhöhten Temperaturen meist erübrigt. Bei wesentlich erhöhten Temperaturen kann es sogar zu Störungen bei der Verkapselung durch Agglomeration der Mikrokapseln oder Ausfällung von Polyurethanharnstoff außerhalb der Kapselwandbildung kommen.

Die Addukte der aromatischen Polyisocyanate besitzen in Wasser nicht die Stabilität wie diejenigen der aliphatischen Polyisocyanate. Oberhalb der Raumtemperatur tritt mit steigender Temperatur sehr bald eine Rückspaltung in Bisulfit und Polyisocyanat mit entsprechender Umsetzung der isocyanatgruppen über Reaktion mit Wasser zu Polyurethanharnstoff ein. Man gibt solche Addukte daher zweckmäßig als trockenes Pulver kurz vor der Umsetzung zum slurry. Obwohl es deutliche Vorteile hinsichtlich der Wandbildungstemperatur für Mikrokapseln gibt, sind die Bisulfitaddukte der aromatischen Polyisocyanate gegenüber denen der aliphatischen Polyisocyanate weniger bevorzugt. Die Gründe liegen in der geringeren Verfahrenssicherheit bei der Mikroverkapselung und in der schwierigeren technischen herstellbarkeit dieser Gruppe von Addukten.

Beispielhaft seien folgende aromatische oder aliphatische Polyisocyanate aufgeführt, die in Form ihrer Bisulfitaddukte wasserlöslich sind :

Ausgangskomponenten sind aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q\ (NCO)_n$$

in der

n = 2-4, vorzugsweise 2, und

Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen araliphatischen Kohlenwasserstoffrest mit 8-15, vorzugsweise 8-13 C-Atomen

bedeuten, z. B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage : Triphenylmethan-4,4',4''-triisocyanat, Polyphenyl-polymethylenpolyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenyl-sulfonyl-isocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden. Ferner ist es möglich, beliebige Mischungen der vorgenannten Polyisocyanate zu verwenden.

Besonders bevorzugte Polyisocyanate sind :

1,6-Hexamethylendiisocyanat, 1-Isocyanato-3,3,5-trimethyl-5-isocyanatomethylcyclohexan, 2,4- und 2,6-Toluylendiisocyanat, Diphenylmethan-2,4- und/oder -4,4'-diisocyanat, sowie Urethangruppen, Allophanatgruppen, Isocyanuratgruppen, Harnstoffgruppen, oder Biuretgruppen und/oder Oxadiazintriongruppen aufweisende Polyisocyanate, die sich von den oben genannten Diisocyanaten ableiten.

Bisulfitaddukte von aliphatischen Polyisocyanaten sind in Wasser völlig stabil, werden aber durch Reaktion mit primären Aminogruppen zu Polyharnstoffen umgesetzt. Eine solche Reaktion findet an der Grenzfläche zwischen wäßriger äußerer Phase und disperser Aminphase statt. Das Polyisocyanat wird an der Grenzfläche durch Polymerenbildung in die kapselwand eingebaut, während das Bisulfit in der wäßrigen Phase zurückbleibt.

Bisulfitaddukte von Polyisocyanaten, d. h. Umsetzungsprodukte von Natriumhydrogensulfit mit aliphatischen und aromatischen Polyisocyanaten sind an sich bekannt und werden beispielsweise von S. Petersen in Liebig's Annalen der Chemie, Bd. 562 (1949), Seiten 205 ff. beschrieben. Gleichfalls ist deren Umsetzung in wäßriger Phase mit Aminen zu Polyharnstoffen bekannt.

Trotzdem war es sehr überraschend und für den Fachmann unerwartet, daß die beschriebene Mikroverkapselung in so einfacher Weise durchgeführt werden kann.

Für den Fachmann war nämlich zu erwarten, daß Bisulfitaddukte von Polyisocyanaten bei der durch die Lösung in Wasser gegebenen sehr feinen Verteilung der Moleküle bei Rückspaltung mit Wasser reagieren und die entstehenden Amine mit anderen Bisulfitaddukten unter Harnstoffbildung weiterreagieren würden. Die letztere Reaktion ist bei Bisulfitaddukten von aromatischen Polyisocyanaten als spontane Rückspaltung bei Raumtemperatur bekannt. Es war darüber hinaus zu erwarten, daß eine geringe Löslichkeit (einige ppm) des Polyamins im Wasser ausreichen würde, um die feinverteilten Bisulfitaddukte in der Lösung zu spalten und in der Folge unter Ausfällung eine Polyurethanharnstoffbildung außerhalb der Kapselwand zu verursachen. Dieses Vorurteil wurde in anfänglichen Versuchen mit den in üblicher Weise hergestellten Bisulfitaddukten zunächst auch dadurch bestätigt, daß sich Kapseln in der erfindungsgemäßen Weise nicht bildeten bzw. nach anfänglicher Bildung beim Rühren im slurry verklebeten und der slurry mehr oder weniger stark gelierte. In keinem Falle wurde eine Isolierung der Kapseln, beispielsweise durch Sprühtrocknen, erreicht.

Erst nach Verwendung eines pulverförmigen Bisulfitadduktes, welches einem speziellen Reinigungsprozeß unterzogen worden war, wurde erkannt, daß alle bisher verwendeten wäßrigen Lösungen der

Bisulfitaddukte geringe Mengen Emulgator vom Herstellungsprozeß her enthielten. Nach Entferung des Emulgators konnten auch mit wäßrigen Lösungen Mikrokapseln in der erfindungsgemäßen Weise hergestellt werden.

Lösungen von Bisulfitaddukten können vom Herstellungsprozeß her noch Bisulfite enthalten. Es ist zweckmäßig, diese Anteile vor Beginn des Verkapselungsprozesses durch Zugabe entsprechender Mengen neutralisierender Substanzen wie z. B. Hydroxiden, Carbonaten und/oder Bicarbonaten in neutrale Salze umzuwandeln.

Der Bildungsprozeß der Kapselwand kann durch weitere Maßnahmen beschleunigt und gefördert werden. Dies kann durch Zugabe von Katalysatoren geschehen, welche die Rückspaltung der Bisulfitaddukte fördern, wie z. B. Triethylendiamin, Diethanolamin, oder durch Umwandlung der neu entstehenden sauren Bisulfite in neutrale Salze durch Zugabe entsprechender Mengen Hydroxide, Carbonate und/oder Bicarbonate.

Die Dosierung dieser Zugabe muß sehr vorsichtig entsprechend der fortschreitenden Kapselwandbildung erfolgen. Bei einmaliger oder zu hoher Zugabe wird leicht mehr Polyisocyanat freigesetzt als unmittelbar mit dem Polyamin umgesetzt werden kann, mit der Folge einer mehr oder weniger starken Agglomeratbildung.

Wird der Rückspaltungskatalysator, z. B. Diethanolamin vor der Emulgierung in die ölige Phase gegeben so wirkt er beim Übertritt aus der dispersen Phase in die äußere Phase stets in der Nähe der Grenzfläche. Eine Agglomeration kann so vermieden werden.

Das erfindungsgemäße Verkapselungsverfahren und die so erhaltenen Mikrokapseln besitzen eine Reihe von Vorteilen.

Das Verfahren erlaubt durch seine Variationsbreite in vielen Fällen die Auswahl günstiger oder verbilligender Parameter. So kann bei der Mikroverkapselung mit hochschmelzenden Polyaminen eine Mischung von Polyaminen von Vorteil sein. Ein bei Raumtemperatur flüssiges Polyamin löst im allgemeinen feste höherschmelzende Amine, so daß eine Verkapselung bei niedrigerer Temperatur erfolgen kann. Dies ist z. B. dann besonders kostensenkend und technisch vereinfachend, wenn auf diese Weise eine Verkapselung bei Überdruck vermieden werden kann.

Die nach dem beschriebenen Verfahren hergestellten Mikrokapseln werden als Dispersion in Wasser verwendet, können aber auch durch Sprühtrocknung zu Pulver verarbeitet werden.

Letzteres kann mit den üblichen technischen Geräten ohne weitere besondere Maßnahme geschehen. Die gesprühten Pulver enthalten neben den Feststoffanteilen der Schutzkolloide auch noch die abgespaltenen Bisulfite oder durch weitere Reaktion daraus entstandene Salze.

Die Salzmenge kann — je nach der eingestellten Wanstärke — bis zu 20 % des Trockengutes betragen. Im allgemeinen stört der Salzanteil nicht. In Sonderfällen muß der Salzanteil jedoch aus dem Sprühpulver entfernt werden. Da die Salzkristalle, die bei der Sprühtrocknung anfallen, wesentlich kleiner als die Mikrokapseln sind, läßt sich dies z. B. durch entsprechende Anordnung und Auslegung von Zyklon und nachgeschaltetem Schlauchfilter im Rahmen des Sprühtrocknungsvorgangs technisch leicht erreichen.

Die erfindungsgemäßen Mikrokapseln können z. B. auf folgenden Gebieten eingesetzt werden :

Als Farbstoffvorläufer enthaltende Kapseln zur Herstellung von Reaktionsdurchschreibepapieren, als Zusätze bei der Herstellung von Formkörpern aus Harzmassen, Elastomeren, Schäumen, z. B. in Form verkapselter Flammschtzmittel, z. B. auf Basis von organischen Phosphor- bzw. Chlor- und Bromverbindungen, oder Treibmittel oder in Form verkapselter Katalysatoren, insbesondere mit sekundären oder tertiären Aminogruppen.

Als Lösungsmittelkapseln bei der Reaktivierung von Klebstoffschichten.

Als Farbstoffe oder Pigmente enthaltende Kapseln, die in Pulverform als Toner für Kopiersysteme eingesetzt werden.

Als Aktivkohle enthaltende Kapseln für absorbierende Systeme aller Art, z. B. für den Einbau in Schutzanzüge oder für Dialysesysteme.

Wenn die Kapseln nur Polyamine enthalten, können sie als Vernetzer für Polyurethansysteme mit retardierter Wirkung eingesetzt werden.

Der Gegenstand der Erfindung wird durch folgende Beispiele verdeutlicht : Inverse Verkapselung

## Beispiel 1

a) Herstellung einer Schutzkolloidlösung

Aus 1 Teil Polyvinylalkohol (Mowiol 26/88® der Hoechst AG, Frankfurt), 2 Teilen Xanthan (Kelzan D® der Fa. Kelco, Division of Baltimore Aircoil/Chemviron SA) und 397 Teilen destilliertem Wasser wird durch Rühren bei Raumtemperatur eine Schutzkolloidlösung hergestellt.

b) Herstellung einer Farbgeberlösung

46 Teile Benzoylleukomethylenblau und 139 Teile Kristallviolettlacton werden in 3932 Teilen Diisopropylnaphthalin durch Erwärmung unter Rühren klar gelöst und zu dieser Lösung 983 Teile Isohexadecan zugegeben.

c) Herstellung einer Farbgeberlösung

1 Teil eines grünentwickelnden Fluoranderivates (Pergascript Olive IG® der Fa. Ciba-Geigy) wird in 19 Teilen Diisopropyldiphenyl unter Rühren durch Erwärmung auf 80 °C klar gelöst.

Beispiel 2

270 g einer Schutzkolloidlösung nach Beispiel 1a werden bei Raumtemperatur in einem Becherglas vorgelegt und 64,5 g einer Mischung bei Raumtemperatur aus 55 g Farbgeberlösung nach Beispiel 1b und 9,5 g Diethyltoluylendiamin unter Rühren mit einer Kotthoff-Mischsirene (Typ MS 1 FCAB, Fa. Kotthoff, Rodenkirchen/Köln) bei 950 Upm zugegeben. Danach wird die Drehzahl für 45 Sekunden auf 9 000 Upm erhöht. Es entsteht eine sehr feine Öl-in-Wasser-Emulsion. Die Drehzahl wird für 15 Sekunden auf 950 Upm reduziert und 200 g einer Klaren Lösung von 20 °C aus 180 g Schutzkolloidlösung und 20 g eines pulvrigen Natriumbisulfitadduktes des Hexamethylendiisocyanates zugegeben.

Nach einer zweiten Emulgierphase von 45 Sekunden mit der Mischsirene bei 9 000 Upm wird der slurry in einem Rührbecher mit Rückflußkühler und Laborrührer gegeben und bei 200 Upm unter Erwärmung auf 90 °C insgesamt 450 Minuten gerührt.

Man erhält einen agglomeratfreien slurry mit glatten, runden, klar durchsichtigen Kapseln mit Durchmessern zwischen 1 und 16 µm. Durch Sprühtrocknen mit einem Laborsprühtrockner (Mini Spray Dryer Büchi 190, Fa. Büchi, CH-9230 Flawil, Schweiz) erhält man ein weißes Kapselpulver mit geringen Agglomeratanteilen. Die Kapseln haben den gleichen Durchmesserbereich wie im slurry und besitzen einen flüssigen Kern.

Beispiel 2a

Zur Herstellung eines Kohlefreien Durchschreibesatzes wird der nach Beispiel 2 hergestellte slurry mit einer Schichtdicke von 20 µm auf ein Blatt Schreibmaschinenpapier aufgerakelt.

Nach Trocknung der wäßrigen Bestandteile des slurrys an der Luft bei Raumtemperatur erhält man ein CB-Blatt (Geberpapier), welches mit seiner beschichteten Rückseite (coated back = CB) auf die mit Clay beschichtete Vorderseite (coated front = CF) eines handelsüblichen CF-Blattes (Nehmerpapier) gelegt wird.

Beim Beschreiben der Oberseite des CB-Blattes mit einem Kugelschreiber zerbrechen die Kapseln der CB-Schicht, die Farbgeberlösung wird ausgeschwemmt, und der gelöste Farbvorläufer reagiert in der CF-Schicht zu einer dunkelblauen Farbe. Man erhält entsprechend eine dunkelblau gefärbte Durchschrift auf der Oberseite des Nehmerpapiers.

Beispiel 3a

Es wird verfahren wie in Beispiel 2. Zusätzlich werden 5 Minuten nach Versuchsbeginn 15 g 30 %-ige NaOH-Lösung zugegeben.

Die Kapselbildung erfolgt danach — sehr viel schneller als im Beispiel 2 — bereits innerhalb weiterer 10 Minuten, jedoch verbunden mit einer starken Agglomeratneigung der Kapseln. Nach insgesamt 60 Minuten wird der Versuch beendet. Man erhält einen slurry mit fast vollständig agglomerierten Kapseln. Die Agglomerate lassen sich weitgehend zu Einzelkapseln zerreiben. Die Einzelkapseln haben Durchmesser von 1-15 µm, faltige Oberfläche, unrunde Form und sind in Durchsicht trüb.

Beispiel 3b

Es wird verfahren wie in Beispiel 2. Zusätzlich werden 5 Minuten nach Versuchsbegin 5,6 g $Na_2CO_3$ als Pulver zugegeben. Die Kapselbildung erfolgt innerhalb weiterer 15 Minuten unter gleichzeitiger Ausbildung traubenförmiger Agglomerate mit Durchmessern bis zu 60 µm.

Nach insges. 60 Minuten wird der Versuch beendet. Die Agglomerate lassen sich auf einem Objektträger leicht zu Einzelkapseln ohne deren Zerstörung zerreiben. Die Einzelkapseln haben Durchmesser von 1-10 µm, sind rund, klar durchsichtig und besitzen glatte Oberflächen. Analog zu Beispiel 2 a lassen sich durch Naßbeschichtung sehr gut durchschreibende Geberpapiere herstellen.

Beispiel 3c

Es wird verfahren wie in Beispiel 2. Zusätzlich werden 5 Minuten nach Versuchsbeginn 8,9 g $NaHCO_3$ als Pulver zugegeben. Die Kapselbildung erfolgt innerhalb weiterer 10 Minuten unter gleichzeitiger Ausbildung lockerer Agglomerate bis zu 230 µm Durchmesser.

Nach insgesamt 55 Minuten wird der Versuch beendet. Zur Zerteilunq der Agglomerate wird der slurry erneut an die Mischsirene umgesetzt und 5 Minuten bei 3 000 Upm gerührt. Danach erhält man einen weitgehend agglomeratfreien slurry mit runden, klar durchsichtigen Kapseln mit glatter Oberfläche und Durchmessern zwischen 1 und 14 µm. Analog zu Beispiel 2 a lassen sich durch Naßbeschichtung sehr gut durchschreibende Geberpapiere herstellen.

Beispiel 3d

Es wird verfahren wie in Beispiel 2. Zusätzlich werden 15 Minuten nach Versuchsbeginn 15,8 g Triethanolamin zugegeben. Die Kapselbildung erfolgt innerhalb weiterer 10 Minuten unter gleichzeitiger Ausbildung von Agglomeraten bis 32 µm Durchmesser. Nach 85 Minuten wird der Versuch beendet. Zur Zerteilung der Agglomerate wird der slurry erneut an die Mischsirene umgesetzt und 3 Minuten bei 3 000 Upm gerührt. Danach erhält man einen slurry mit runden, klar durchsichtigen Kapseln mit glatter Oberfläche und Durchmessern zwischen 1 und 11 µm. Etwa 30 % der vorwiegend kleineren Kapseln bilden Agglomerate bis 18 µm Durchmesser.

Analog zu Beispiel 2a lassen sich durch Naßbeschichtung sehr gut durchschreibende Geberpapiere herstellen.

Durch Sprühtrocknen erhält man ein Kapselpulver mit ca. 50 % Einzelkapseln mit 1-11 µm, sowie Agglomeraten bis 36 µm Durchmesser. Durch Redispergieren des Kapselpulvers in eine 2 %-ige Polyvinylalkohollösung (Mowiol 26/88® der Hoechst AG, Frankfurt) erhält man eine Streichfarbe, aus der sich analog zu Beispiel 2a durch Naßbeschichtung sehr gut durchschreibende Geberpapiere herstellen lassen.

Beispiel 4

250 g einer Schutzkolloidlösung nach Beispiel 1a werden bei Raumtemperatur in einem Becherglas vorgelegt und 114 g einer Mischung aus 100 g Farbgeberlsöung nach Beispiel 1b und 14 g Diethyltoluylendiamin unter Rühren mit einer Kotthoff-Mischsirene bei 950 Upm zugegeben.

Danach wird die Drehzahl für 45 Sekunden auf 9 000 Upm erhöht. Es entsteht eine feine Öl-in-Wasser-Emulsion. Die Drehzahl wird für 15 Sekunden auf 950 Upm reduziert und 153 g einer klaren Lösung von 20 °C aus 125 g Schutzkolloidlösung, 25 g pulvrigem Natriumbisulfitaddukt des biuretisierten Hexamethylendiisocyanates und 3 g pulvrigem Natriumbisulfitaddukt des Hexamethylendiisocyanates zugegeben. Nach einer zweiten Emulgierphase von 45 Sekunden mit der Mischsirene bei 9 000 Upm wird der slurry an einem Laborrührer umgesetzt und bei 700 Upm unter Erwärmung auf 50 °C insgesamt 120 Minuten gerührt.

Man erhält einen agglomeratfreien slurry mit runden, klar durchsichtigen Kapseln von 1-10 µm Durchmesser.

Analog zu Beispiel 2a lassen sich durch Naßbeschichtung gut durchschreibende Geberpapiere herstellen.

Beispiel 5

Man verfährt wie in Beispiel 4 bis zur Herstellung der Öl-in-Wasser-Emulsion.

Nach Reduzierung der Drehzahl auf 950 Upm werden jetzt 155 g einer Lösung aus 125 g Schutzkolloidlösung und 30 g des pulvrigen Natriumbisulfitadduktes des biuretisierten Hexamethylendiisocyanats zugegeben. Nach einer weiteren Emulgierphase von 45 Sekunden mit der Mischsirene bei 9 000 Upm wird der slurry an einen Laborrührer umgesetzt und bei 700 Upm unter Ewärmung auf 70 °C insgesamt 300 Minuten gerührt. Es entsteht ein agglomeratfreier slurry mit runden, klar durchsichtigen kapseln von 1-10 µm Durchmesser. Analog zu Beispiel 2a lassen sichen durch Naßbeschichtung gut durchschreibende Geberpapiere herstellen.

Beispiel 6

250 g einer Schutzkolloidlösung nach Beispiel 1a werden bei 80 °C in einem Becherglas vorgelegt und 113,5 g einer Lösung von 80 °C aus 100 g Farbgeberlösung nach Beispiel 1b und 13,5 g Diphenylmethandiamin unter Rühren mit einer Kotthoff-Mischsirene bei 950 Upm zugegeben. Danach wird die Drehzahl für 45 Sekunden auf 9 000 Upm erhöht. Es entsteht eine Öl-in-Wasser-Emulsion. Die Drehzahl wird für 15 Sekunden auf 950 Upm reduziert und 144 g einer auf 80 °C erwärmten klaren Lösung aus 125 g Schutzkolloidlösung und 19 g eines pulvrigen Natriumbisulfitadduktes des Hexamethylendiisocyanats zugegeben. Nach einer zweiten Emulgierphase von 45 Sekunden mit der Mischsirene bei 9 000 Upm wird der slurry an einen Laborrührer umgesetzt und bei 80 °C insgesamt 150 Minuten gerührt.

Man erhält einen agglomeratfreien slurry mit runden in Durchsicht trüben Kapseln mit Durchmessern zwischen 3 und 60 µm. Aus 1 Teil slurry und 3 Teilen 2 %-iger Polyvinylalkohollösung (Mowiol 26/88 ® der Hoechst AG, Frankfurt) wird durch Mischen eine Streichfarbe hergestellt. Analog zu Beispiel 2a lassen sich durch Naßbeschichtung mit einer 50 µm-Rakel durchschreibende Geberpapiere herstellen.

Beispiel 7

270 g einer Schutzkolloidlösung nach Beispiel 1a werden bei Raumtemperatur in einem Becherglas vorgelegt und 64,5 g einer Mischung aus 55 g Farbgeberlösung nach Beispiel 1c und 9,5 g Diethyltoluylendiamin unter Rühren mit einer Kotthoff-Mischsirene bei 950 Upm zugegeben.

Danach wird die Drehzahl für 45 Sekunden auf 9 000 Upm erhöht. Es entsteht eine sehr feine Öl-in-Wasser-Emulsion. Die Drehzahl wird für 15 Sekunden auf 950 Upm reduziert und 200 g einer Klaren Lösung bei Raumtemperatur aus 180 g Schutzkolloidlösung und 20 g eines pulvrigen Natriumbisulfitadduktes des Hexamethylendiisocyanats zugegeben. Nach einer zweiter Emulgierphase von 45 Sekunden mit der Mischsirene bei 9 000 Upm wird der slurry in einen Dreihalskolben mit Laborrührer und Rückflußkühler umgefüllt und unter Erwärmung auf 90 °C insgesamt 180 Minuten und unter Abkühlung auf Raumtemperatur weitere 120 Minuten gerührt.

Man erhält einen agglomeratfreien slurry mit runden in Durchsicht leicht trüben Kapseln, deren Durchmesser zwischen 3 und 14 µm liegen. Analog zu Beispiel 2a lassen sich durch Naßbeschichtung gut durchschreibende Geberpapiere herstellen. Man erhält eine dunkelgrüne Durchschrift auf dem Nehmerpapier. Die Durchschreibefähigkeit des Papiers war nach einem Monat noch unverändert gut.

Ein durch Sprühtrocknen erhaltenes Kapselpulver besteht aus runden Kapseln mit runzeliger Oberfläche und Durchmessern zwischen 3 und 11 µm. Etwa die Hälfte der Kapseln ist in Agglomeraten bis 18 µm Durchmesser agglomeriert.

Durch Redispergieren des Pulvers in einer 2 %-igen Polyvinylalkohollösung (15 Teile Pulver auf 85 Teile Lösung) erhält man eine Streichfarbe, mit der sich analog zu Beispiel 2a durch Naßbeschichtung mit dunkelgrüner Schrift sehr gut durchschreibende Geberpapiere Herstellen lassen.

## Beispiel 7a

15 Minuten vor Versuchsbeginn wird durch Mischen von 88 Teilen Farbgeberlösung nach Beispiel 1c und 22 Teilen Oxadiazintrion aus Hexamethylendiisocyanat bei 80 °C und Abkühlung auf Raumtemperatur eine klare Lösung hergestellt.

250 g einer Schutzkolloidlösung nach Beispiel 1a werden bei Raumtemperatur in einem Becherglas vorgelegt und 71 g der zuvor hergestellten klaren Lösung unter Rühren mit einer Kotthoff-Mischsirene bei 950 Upm zugegeben. Nach einer Emulgierzeit von 1 Minute wird die Emulsion an einen Laborrührer umgesetzt und mit 500 Upm insgesamt 180 Minuten gerührt. Zwei Minuten nach Versuchsbeginn wird eine Lösung aus 150 g Wasser und 26,4 g Diethylentriamin zugegeben. Innerhalb weiterer 8 Minuten entstehen hinreichend stabile Kapseln, so daß insgesamt 10 Minuten nach Versuchsbeginn ein Teil des slurrys analog Beispiel 2a auf ein Blatt Schreibmaschinenpapier gerakelt und getrocknet werden kann, ohne daß Kapseln zerstört werden. Man erhält ein Geberpapier, welches etwa 30 Minuten nach Versuchsbeginn beim Beschriften auf Nehmmerpapier ein olivgrünes Schriftbild erzeugt.

Eine Wiederholung der Durchschrift etwa 60 Minuten nach Versuchsbeginn ergibt ein kaum sichtbares Schriftbild und 180 Minuten nach Versuchsbeginn ist die Durchschreibefähigkeit des Geberpapiers erloschen. Geberpapiere, die mit 60 bzw. 120 Minuten nach Versuchsbeginn entnommenem slurry hergestellt wurden, erzeugten anfangs noch schwache Durchschriften und nach zwei Stunden kein Schriftbild mehr.

Der an Versuchsende erhaltene slurry ist agglomeratfrei. Die Kapseln besitzen flüssigen Inhalt, eine faltige Oberfläche und Durchmesser zwischen 2 und 28 µm.

## Beispiel 8

270 g einer Schutzkolloidlösung nach Beispiel 1a werden bei Raumtemperatur in einem Becherglas vorgelegt und 64,5 g einer Mischung aus 55 g Paraffinöl DAB 7 (Siedebereich über 360 °C) und 9,5 g Diethyltoluylendiamin unter Rühren mit einer Kotthoff-Mischsierne bei 950 Upm zugegeben.

Danach wird die Drehzahl für 45 Sekunden auf 9 000 Upm erhöht. Es entsteht eine feine Öl-in-Wasser-Emulsion. Die Drehzahl wird für 15 Sekunden auf 950 Upm reduziert und 200 g einer klaren Lösung von Raumtemperatur aus 180 g Schutzkolloidlösung und 20 g eines pulvrigen Natriumbisulfitadduktes des Hexamethylendiisocyanats zugegeben. Nach einer zweiten Emmulgierphase von 45 Sekunden mit der Mischsirene bei 9 000 Upm wird der slurry in einen Dreihalskolben mit Laborrührer und Rückflußkühler umgefüllt und unter Erwärmung auf 90 °C insgesamt 180 Minuten und unter Abkühlung auf Raumtemperatur weitere 120 Minuten gerührt. Man erhält einen slurry, der Kapseln mit Durchmessern zwischen 3,5 und 31 µm und lockere Agglomerate dieser Kapseln enthält. Die Kapseln lassen sich durch Sprühtrocknen leicht zu Kapselpulver überführen.

## Beispiel 8a

Zur Herstellung einer Isocyanat enthaltenden organischen Phase werden 88 Teile Paraffinöl DAB 7 (Siedebereich über 360 °C) und 22 Teile Hexamethylendiisocyanat bei 80 °C mit einer Kotthoff-Mischsirene 5 Minuten bei 9 000 Upm gerührt und auf Raumtemperatur abgekühlt. Es entsteht keine Lösung, sondern eine wenig stabile Emulsion des Diisocyanates im Paraffinöl.

250 g einer Schutzkolloidlösung nach Beispiel 1a werden bei Raumtemperatur in einem Becherglas vorgelegt und 71 g der zuvor hergestellten organischen Emulsion unter Rühren mit der Mischsirene bei 950 Upm zugegeben. Nach einer Emulgierzeit von einer Minute wird die Öl-in-Wasser-Emulsion an einem

Laborrührer mit 500 Upm umgesetzt. Zwei Minuten nach Versuchsbeginn wird eine Lösung aus 150 g Wasser und 64,4 g Diethylentriamin zugegeben. Es entsteht ein Gemisch aus massiven Polyurethanharnstoffperlen und -stücken neben unverkapselten Paraffinöltröpfchen. Paraffinöl DAB 7 kann in dieser Weise nicht verkapselt werden.

Beispiel 8b

Beispiel 8a wird wiederholt mit dem Unterschied, daß an Stelle des Hexamthylendiisocyanats das Oxadiazintrion aus Hexamethylendiisocyanat eingesetzt und entsprechend nur 26,4 g Diethylentriamin zugefügt wird. Das Ergebnis ist das gleiche wie in Beispiel 8a.

Beispiel 9

270 g einer Schutzkolloidlösung nach Beispiel 1a werden bei Raumtemperatur in einem Becherglas vorgelegt und 64,5 g einer Mischung aus 55 g eines teilhydrierten Terphenyls (Santosol 340® der Fa. Monsanto) und Isohexadecan im Verhältnis 1 : 1 sowie 9,5 g Diethyltoleylendiamin unter Rühren mit einer Kotthoff-Mischsirene bei 950 Upm zugegeben.

Danach wird die Drehzahl für 45 Sekunden auf 9 000 Upm erhöht. Es entsteht eine feinteilige Öl-in-Wasser-Emulsion. Die Drehzahl wird für 15 Sekunden auf 950 Upm reduziert und 200 g einer klaren Lösung von 20 °C aus 180 g Schutzkolloidlösung und 20 g eines pulvrigen Natriumbisulfitadduktes des Hexamethylendiisocyanats zugegeben. Nach einer zweiten Emulgierphase von 45 Sekunden mit der Mischsirene bei 9 000 Upm wird der slurry in einen Dreihalskolben mit Laborrührer und Rückflußkühler umgefüllt und unter Erwärmung auf 90 °C insgesamt 180 Minuten und unter Abkühlung auf Raumtemperatur weitere 120 Minuten gerührt.

Man erhält einen slurry mit runden, klar durchsichtigen Kapseln mit Durchmessern zwischen 1,4 und 12 µm. Etwa 30 % der Kapseln bilden Agglomerate bis 200 µm.

Beispiel 9a

Zur Herstellung einer Isocyanat enthaltenden organischen Phase werden 88 Teile einer Mischung aus einem teilhydrierten Terphenyl (Santosol 340® der Fa. Monsanto) und Isohexadecan im Verhältnis 1 :1 und 22 Teile des Oxadiazintrions aus Hexamethylendiisocyanat bei 80 °C mit einer Kotthoff-Mischsirene 5 Minuten bei 9 000 Upm gerührt und auf Raumtemperatur abgekühlt. Es entsteht keine Lösung, sondern eine wenig stabile Emulsion des Diisocyanats in dem Lösungsmittelgemisch.

250 g einer Schutzkolloidlösung nach Beispiel 1a werden bei Raumtemperatur in einem Becherglas vorgelegt und 71 g der zuvor hergestellten Emulsion unter Rühren mit der Mischsirene bei 950 Upm zugegeben. Nach einer Emulgierzeit von einer Minute wird die Öl-in-Wasser Emulsion an einen Laborrührer mit 500 Upm umgesetzt. Zwei Minuten nach Versuchsbeginn wird eine Lösung aus 150 g Wasser und 26,4 g Diethylentriamin zugegeben. Es entsteht ein Gemisch aus massiven Polyurethanharnstoffperlen neben unverkapselten Lösungsmitteltröpfchen, sowie größere unregelmäßige Agglomerate, die auch Lösungsmitteleinschlüsse enthalten. Eine Verkapselung des Lösungsmittelgemischs aus teilhydriertem Terphenyl und Isohexadecan im Verhältnis 1 : 1 ist nach diesem Verfahren nicht möglich.

Beispiel 10

270 g einer Schutzkolloidlösung nach Beispiel 1a werden bei Raumtemperatur in einem Becherglas vorgelegt und 63,2 g einer Mischung aus 55 g eines teilhydrierten Terphenyls (Santosol 340® der Fa. Monsanto) und Isohexadecan im Verhältnis 1 : 1, sowie 8,2 g Diethyltoluylendiamin unter Rühren mit einer Kotthoff-Mischsirene bei 950 Upm zugegeben. Danach wird die Drehzahl für 45 Sekunden auf 9000 Upm erhöht. Es ertsteht eine Öl-in-Wasser-Emulsion. Die Drehzahl wird für 15 Sekunden auf 950 Upm reduziert und 229,5 g einer klaren Lösung von 20 °C aus 180 g Schutzkolloid lösung und 49,5 einer 40 %-igen wäßrigen Lösung des Natriumbisulfitadduktes von Isophorondiisocyanat zugegeben.

Nach einer zweiten Emulgierphase von 45 Sekunden mit der Mischsirene bei 9 000 Upm wird der slurry in einen Dreihalskolben mit Laborrüher und Rückflußkühler umgefüllt und unter Erwärmung auf 90 °C insgesamt 180 Minuten und unter Abkühlung auf Raumtemperatur weitere 120 Minuten gerührt.

Man erhält einen agglomeratfreien slurry mit einer breiten Kapselverteilung von 1,4 bis 150 µm Durchmesser. Die Kapseln sind teilweise unrund und in Durchsicht trüb, besitzen aber alle einen flüssigen Kern.

Beispiel 11

270 g einer Schutzkolloidlösung nach Beispiel 1 a werden bei Raumtemperatur in einem Becherglas vorgelegt und 64,5 g einer Mischung aus 55 g Dodecylbenzol (Marlican S® der Fa. Hüls, Marl) und 9,5 g Diethyltoluylendiamin unter Rühren mit einer Kotthoff-Mischsirene bei 950 Upm zugegeben.

Danach wird die Drehzahl für 45 Sekunden auf 9 000 Upm erhöht. Es entsteht eine feine Öl-in-Wasser-

Emulsion. Die Drehzahl wird für 15 Sekunden auf 950 Upm reduziert und 200 g einer klaren Lösung von 20 °C aus 180 g Schutzkolloidlösung und 20 g eines pulvrigen Natriumbisulfitadduktes des Hexamethylendiamins zugegeben.

Nach einer zweiten Emulgierphase von 45 Sekunden mit der Mischsirene bei 9 000 Upm wird der slurry in einen Dreihalskolben mit Laborrührer und Rückflußkühler umgefüllt und unter Erwärmung auf 90 °C insgesamt 180 Minuten und unter Abkühlung auf Raumtemperatur weitere 120 Minuten gerührt.

Man erhält einen slurry mit runden, klar durchsichtigen Kapseln mit Durchmessern zwischen 1 und 7 µm. Etwa 30 % der Kapseln bilden Agglomerate bis 230 µm.

Beispiel 11a

Zur Herstellung einer Isocyanat enthaltenden organischen Phase werden 88 Teile Dodecylbenzol und 22 Teile des Oxadiazintrions aus Hexamethylendiisocyanat bei 80 °C mit einer Kotthoff-Mischsirene 5 Minuten bei 9 000 Upm gerührt und auf Raumtemperatur abgekühlt. Es entsteht keine Lösung, sondern eine wenig stabile Emulsion des Diisocyanats in dem Lösungsmittel.

250 g einer Schutzkolloidlösung nach Beispiel 1 a werden bei Raumtemperatur in einem Becherglas vorgelegt und 71 g der zuvor hergestellten organischen Emulsion unter Rühren mit der Mischsirene bei 950 Upm zugegeben. Nach einer Emulgierzeit von einer Minute wird die Öl-in-Wasser-Emulsion an einem Laborrührer mit 500 Upm umgesetzt. Zwei Minuten nach Versuchsbeginn wird eine Lösung aus 150 g Wasser und 26,4 g Diethylentriamin zugegeben. Es entsteht ein Gemisch aus massiven Polyurethanharnstoffperlen und -stücken, die teilweise zu größeren Agglomeraten ve klebt sind, neben unverkapselten Lösungmitteltröpfchen. Dodecylbenzol kann nach diesem Verfahren nicht verkapselt werden.

Beispiel 12

125 g einer Schutzkollcidlösung nach Beispiel 1a werden bei Raumtemperatur in einem Becherglas voogelegt und 15,4 g einer klaren Lösung aus 13,2 g Farbgeberlösung nach Beispiel 1c und 2.2 Diethyltoluylendiamin unter Rühren mit einer Kotthoff-Mischsirene bei 950 Upm zugegeben.

Danach wird die Drehzahl für 45 Sekunden auf 9000 Upm erhöht. Es entsteht eine Öl-in-Wasser-Emulsion. Die Drehzahl wird für 30 Sekunden auf 950 Upm reduziert und 100 g einer etwa 15 Minuten vor Versuchsbeginn bei Raumtemperatur hergestellten klaren Lösung aus 90 g Schutzkolloidlösung und 10 g eines pulvrigen Natriumbisulfitadduktes eines Isomerengemisches von Toluylendiisocyanat (80 % 2,4-TDI und 20 % 2,6-TDI) zugegeben. Nach einer zweiten Emulgierphase von 60 Sekunden mit der Mischsirene bei 9000 Upm wird der slurry an einen Laborrüher umgesetzt und bei 700 Upm unter Erwärmung auf 50 °C insgesamt 180 Minuten gerührt.

Man erhält einen agglomeratfreien slurry mit klar durchsichtigen Kapseln mit faltiger Oberfläche und Durchmessern zwischen 1 und 15 µm.

Analog zu Beispiel 2a lassen sich durch Naßbeschichtung mit einer 40 µm-Rakel gut durchschreibende Geberpapiere herstellen. Man erhält eine dunkelgrüne Durchschrift auf dem Nehmerpapier. Die Durchschriftfähigkeit war nach einem Monat noch unverändert gut.

Beispiel 12a

15 Minuten vor Versuchsbeginn wird durch Mischen von 81 Teilen Farbgeberlösung nach Beispiel 1c und 19 Teilen eines Isomerengemisches von Toluylendiisocianat (80 % 2,4 TDI und 20 % 2,6 TDI) bei 80 °C und Abkühlung auf Raumtemperatur eine klare Lösung hergestellt. 135 g einer Schutzkolloidlösung nach Beispiel 1a werden bei Raumtemperatur in einem Becherglas vorgelegt und 34,1 g der zuvor hergestellten Lösung unter Rühren mit einer Kotthoff-Mischsirene bei 950 Upm zugegeben.

Die Drehzahl wird auf 9 000 Upm erhöht und nach einer Emulgierzeit von 45 Sekunden wird an einen Laborrührer mit 500 Upm umgesetzt, 30 Sekunden später wird eine klare Lösung aus 87 g Wasser und 13 g Diethylentriamin zugegeben und insgesamt 120 Minuten gerührt. Es entsteht ein agglomeratfreier slurry mit klar durchsichtigen Kapseln mit faltiger Oberfläche und Durchmessern zwischen 1 und 14 µm.

Ein analog zu Beispiel 2a durch Naßbeschichtung hergestelltes Geberpapier erzeugt beim Beschriften auf einem Nehmerpapier eine rote Durchschrift. Offensichtlich ist durch Reaktion mit dem Diisocyanat bereits eine wesentliche chemische Veränderung des Farbgebers eingetreten, 24 Stunden nach Herstellung des slurrys ist die Durchschreibefähigkeit der Kapseln auf dem bereits hergestellten Geberpapier und auch im slurry erloschen.

Beispiel 13

270 g einer Schutzkolloidlösung nach Beispiel 1a werden bei 70 °C in einem Becherglas vorgelegt und 71 g einer Mischung aus 11 g Diethanolamin, 30 g Marlican S und 30 g Diethyltoluylendiamin unter Rühren mit einem Laborrührer bei 500 Upm zugegeben.

Es entsteht eine sehr feine Öl-in-Wasser-Emulsion.

25 Sekunden nach Zugabe der Aminmischung werden 200 g einer auf 70 °C erwärmten klaren

Lösung aus 180 g Schutzkolloidlösung und 20 g eines pulvrigen Bisulfitadduktes des Hexamethylendiisocyanates zugegeben.

Die Kapselwandbildung erfolgt sehr schnell, bereits innerhalb 10 Minuten. Dies wird durch eine Verdickung des slurrys kenntlich. Insgesamt wird mit erhöhter Drehzahl von 700 Upm bei 70 °C 40 Minuten gerührt. Es entsteht ein agglomeratfreier slurry mit runden, in Durchsicht trüben Kapseln mit rauher faltiger Oberfläche und Durchmessern zwischen 1 und 11 µm. Die Kapseln enthalten eine Mischung von Lösungsmittel und Aminen.

## Beispiel 14

Aus 5 Teilen Polyvinylalkohol (Mowiol 26/88® der Hoechst AG, Frankfurt), 10 Teilen Xanthan (Kelzan D® der Fa. Kelco, Division of Baltimore Aircoil/Chemviron SA) und 1985 Teilen destilliertem Wasser wird durch Rühren bei Raumtemperatur eine Schutzkolloidlösung hergestellt.

270 g der Schutzkolloidlösung werden in einem Becherglas bei 70 °C vorgelegt und unter Rühren mit einem Laborrührer (6 Blätter, Länge 3 cm, Breite 1 cm) bei einer Drehzahl von 500 Umdrehungen pro Minute (Upm) 30 g Diethyltoluylendiamin zugegeben. Es entsteht eine feine Öl-in-Wasser-Emulsion.

30 Sekunden nach Zugabe des diamins werden 200 g einer klaren, auf 70 °C erwärmter Lösung aus 180 g Schutzkolloidlösung und 20 g eines pulvrigen Kaliumbisulfitadduktes des Hexamethylendiisocyanates zugegeben. Danach wird die Drehzahl auf 700 Upm erhöht und insgesamt 70 Minuten bei 70 °C gerührt. Danach haben sich runde, glatte, klar durchsichtige Kapseln mit Durchmessern von 3 bis 18 µm gebildet. Der slurry ist völlig agglomeratfrei.

Nach Abkühlung auf Raumtemperatur wird der slurry in einem Laborsprühtrockner (Mini Spray Dryer Büchi, Fa. Büchi, Schweiz, CH-9230 Flawil) in üblicher Weise trockengelegt.

Man erhält ein feinteiliges, agglomeratfreies hellgelbes Kapselpulver. Die Kapseln haben den gleichen Durchmesserbereich wie im slurry, sind rund und haben aber jetzt eine rauhe Oberfläche und sind in Durchsicht trüb.

## Beispiel 15

Es wird zunächst verfahren wie in Beispiel 14 bis zur Zugabe des Diethyltoluylendiamins.

30 Sekunden nach Zugabe des Diamins werden 122,5 g einer auf 70 °C erwärmten klaren Lösung aus 180 g Schutzkolloidlösung und 12,5 g pulvrigem Natriumbisulfitaddukt des biuretisierten Hexamethylendiisocyanates zugegeben.

Danach wird die Drehzahl auf 700 Upm erhöht und insgesamt 70 Min. bei 70 °C gerührt. Es bilden sich runde, an der Oberfläche rauhe, in Durchsicht trübe Kapseln mit Durchmessern von 4 bis 28 µm.

Nach Sprühtrocknung unter gleichen Bedingungen wie in Beispiel 14 erhält man ein feinteiliges rieselfähiges Kapselpulver mit teilweise agglomerierten Kapseln.

## Beispiel 16

Es wird, wie in Beispiel 14 eine feine Emulsion von Diethyltoluylendiamin in Schutzkolloidlösung hergestellt.

30 Sekunden nach Zugabe des Diamins werden 200 g einer klaren Lösung aus 180 g Schutzkolloidlösung und 20 g pulviges Natriumbisulfitaddukt des Hexamethylendiisocyanates zugegeben.

Danach wird die Drehzahl auf 700 Upm erhöht und insgesamt 70 Minuten bei 70 °C gerührt.

Man erhält einen agglomeratfreien slurry mit runden, glatten, klar durchsichtigen Kapseln mit 5-18 µm Durchmesser. Der slurry läßt sich analog Beispiel 14 sprühtrocknen. Man erhält ein sehr feines, leicht agglomeriertes Kapselpulver.

## Beispiel 17

Es wird, wie in Beispiel 14, eine feine Öl-in-Wasser-Emulsion von Diethyltoluylendiamin in Schutzkolloidlösung hergestellt. 30 Sekunden nach Zugabe des Diamins werden 247,5 g einer auf 65 °C erwärmten klaren Lösung aus 180 g Schutzkolloidlösung und 67,5 g einer 40 %-igen wäßrigen Lösung des Natriumbisulfitadduktes des Trimerisates von Hexamethylendiisocyanat mit einem berechneten verkappten NCO-Gehalt von 7,8 % zugegeben.

Danach wird die Drehzahl auf 700 Upm erhöht, auf 70 °C erwärmt und insgesamt 70 Minuten gerührt.

Es entsteht ein agglomeratfreier, sedimentationstabiler slurry mit runden, an der Oberfläche rauhen Kapseln in Durchmessern von 2,5 bis 20 µm.

## Beispiel 18

810 g einer Schutzkolloidlösung, wie in Beispiel 14 verwendet, werden in einem Becherglas bei 70 °C vorgelegt, und unter Rühren mit einem Laborrührer (6 Blätter, Länge 3 m, Breite 1 cm) bei einer Drehzahl von 700 Upm werden 90 g Diethyltoluylendiamin zugegeben. Es entsteht eine feine Öl-in-Wasser-

Emulsion. Eine Minute nach Zugabe des Diamins werden 700 g einer auf 65 °C erwärmten klaren Lösung aus 540 g Schutzkolloidlösung und 167 g einer 40 %-igen wäßrigen Lösung des Natriumbisulfitadduktes von Isophorondiisocyanat zugegeben. Nach drei Minuten wird das Becherglas an eine Kotthoff-Mischsirene (Type De 032 S) umgesetzt und zwei Minuten lang mit 5 320 Upm emulgiert.

Danach wurde mit dem zuvor eingesetzten Laborrührer unter Erwärmung auf 70 °C mit 700 Upm weitere 65 Minuten gerührt.

Man erhält einen agglomeratfreien, sedimentationsstabilen slurry mit runden, klar durchsichtigen Kapseln mit glatter Oberfläche und Kapseldurchmessern zwischen 1 und 17 μm.

Durch Sprühtrocknen läßt sich ein agglomeratfreies Kapselpulver herstellen. Die Kapseln des Pulvers sind rund, in Durchsicht trüb, mit unzliger Oberfläche.

Beispiel 19

25 Teile biuretisiertes Hexamethylendiisocyanat (Desmodur(R)N, Bayer AG) werden mit 28 Teilen Kapseln aus Beispiel 5 zu einem Brei vermengt und innerhalb von 10 Minuten auf 120 °C erwärmt. Die Masse beginnt sich bei Temperaturen über 70 °C zu verfestigen und ist bei Erreichen von 120 °C spröde hart.

Eine parallel erwärmte Probe des gleichen Polyisicyanates ohne Kapseln bleibt flüssig.

Eine gegen Luftfeuchtigkeit direkt verschlossene Rückstellprobe der zuvor beschriebenen Polyisocyanat-Kapsel-Mischung bleibt bei Raumtemperatur mindestens 8 Tage in ihrer breiigen Konsistenz erhalten.

Beispiel 20

100 Teile einer Chlorbenzollösung, welche 25 % biuretisiertes Hexamethylendiisocyanat enthält, werden mit 28 Teilen Kapseln aus Beispiel 5 gemischt und innerhalb von 10 Minuten auf 120 °C erwärmt. Die Masse härtet während dieser Zeit zu einem schlagzähen Festkörper aus.

Eine gegen Luftfeuchtigkeit direkt verschlossene Vergleichsprobe der zuvor angegebenen Mischung bleibt bei Raumtemperatur mindestens 8 Tage flüssig.

Beispiel 21

Es wird wie in Beispiel 14 eine feine Emulsion von Diethyltoluylendiamin in Schutzkolloidlösung hergestellt.

30 Sekunden nach Zugabe des Diamins werden 245 g einer auf 65 °C erwärmten klaren Lösung aus 180 g Schutzkolloidlösung und 65 g einer 40 %-igen wäßrigen Lösung des Natriumbisulfitadduktes einer Mischung aus 41 Teilen Isophorondiisocyanat und 59 Teilen biuretisiertem Hexamethylendiisocyanat zugegeben. Danach wird die Drehzahl auf 700 Upm erhöht, auf 70 °C erwärmt und insgesamt 70 Minuten gerührt.

Man erhält einen agglomeratfreien, sedimentationsstabilen slurry. Die Kapseln sind rund, mit glatter Oberfläche, teilweise in Durchsicht trüb und besitzen Durchmesser von 1,5 bis 15 μm.

Beispiel 22

Es wird, wie in Beispiel 18, eine freine Emulsion von Diethyltoluylendiamin in Schutzkolloidlösung hergestellt. Eine Minute nach Zugabe des Diamins werden 617 g einer auf 65 °C erwärmten klaren Lösung aus 540 g Schutzkolloidlösung, 30 g pulvrigen Natriumbisulfitadduktes von Hexamethylendiisocyanat und 47 g einer 40 %-igen wäßrigen Lösung des Natriumbisulfitadduktes von biuretisiertem Hexamethylendiisocyanat zugegeben.

Nach drei Minuten wurde das Becherglas an eine Kotthoff-Mischsirene (Type De 032 S) umgesetzt und zwei Minuten lang mit 5 320 Upm emulgiert. Danach wurde mit dem zuvor eingesetzten Laborrührer unter Erwärmung auf 70 °C mit Drehzahl 700 Upm weitere 65 Minuten gerührt.

Man erhält einen agglomeratfreien, sedimentationsstabilen slurry mit Kapseln im Durchmesserbereich von 1-16 μm. Die Kapseln sind vorwiegend glatt, klar durchsichtig und rund, die größeren Kapseln sind teilweise unregelmäßig geformt, in Durchsicht trübe und mit faltiger Oberfläche.

Eine sprühgetrocknetes Kapselpulver ist gut rieselfähig, enthält flüssigkeitsgefüllte Kapseln mit teilweise unregelmäßigen Formen, in Durchsicht trüb und mit faltiger Oberfläche, sowie Agglomerate bis 75 μm.

Beispiel 23

15 Minuten vor der Umsetzung wird bei Raumtemperatur (ca. 23 °C) eine klare Lösung aus 25 Teilen Schutzkolloidlösung, wie in Beispiel 14 verwendet, durch Zugabe von 3 Teilen eines pulvrigen Natriumbisulfitadduktes eines Isomerengemisches von Toluylendiisocyanat (80 % 2,4-TDI und 20 % 2,6-TDI) unter Rühren von 5 Minuten Dauer hergestellt.

135 g der bereits zuvor verwendeten Schutzkolloidlösung werden in einem Becherglas bei Raumtemperatur vorgelegt, und unter Rühren mit einem Laborrührer bei 500 Upm werden 15 g Diethyltoluylendiamin zugegeben. Es entsteht eine feine Öl-in-Wasser-Emulsion.

30 Sekunden nach Zugabe des Diamins werden 100,8 g der zuvor bereiteten Lösung des Bisulfitadduktes zugegeben. Danach wird die Drehzahl auf 700 Upm erhöht und insgesamt 70 Minuten gerührt. Emulsionen und slurry bleiben während des gesamten Versuchs bei Raumtemperatur.

Es entsteht eine agglomeratfreier slurry. Die Kapseln sind rund, klar durchsichtig mit leicht faltiger Oberfläche und besitzen Durchmesser von 1 bis 10 µm.

Durch Sprühtrocknen läßt sich ein Kapselpulver mit geringen Agglomeratanteilen herstellen. Die Kapseln sind jetzt in Durchsicht trübe, mit verstärkt faltiger Oberfläche und besitzen einen flüssigen Kern.

Beispiel 24

270 g einer Schutzkolloidlösung, wie in Beispiel 1a beschrieben, werden in einem Becherglas bei 80 °C vorgelegt und unter Rühren mit einem Laborrührer bei 700 Upm werden 20 g eines flüssigen Diamingemisches aus 10,5 4,4'-Diaminodiphenylmethan und 9,5 g Diethyltoluylendiamin von 80 °C zugegeben.

25 Sekunden nach Zugabe des Diamingemisches werden 200 g einer klaren, auf 80 °C erwärmten Lösung aus 180 g Schutzkolloidlösung und 20 g eines pulvrigen Natriumbisulfitadduktes des Hexamethylendiisocyanats zugegeben.

Die Mischung wird weiter bei 700 Upm insgesamt 70 Minuten bei 80 °C gerührt.

Nach Abkühlung auf Raumtemperatur erhält man einen slurry, in welchen etwa 10 % der Kapseln Agglomerate bis 35 µm gebildet haben. Die Einzelkapseln erscheinen teilweise klar, teils trübe in der Durchsicht, mit runzelig bis faltiger Oberfläche und besitzen einen festen Kern.

Beispiel 25

135 g einer Schutzkolloidlösung, wie in Beispiel 1 a beschrieben, werden in einem Becherglas bei 70 °C vorgelegt, und unter Rühren mit einem Laborrührer bei 500 Upm werden 15 g des bei Raumtemperatur flüssigen, zweifach aminomethylierten Cyclododecans zugegeben. Es entsteht eine sehr feine Öl-in-Wasser-Emulsion.

25 Sekunden nach Zugabe des Diamins werden 112,5 g einer auf 70 °C erwärmten klaren Lösung aus 90 g Schutzkolloidlösung und 22,5 g einer 40 %-igen wäßrigen Lösung des Natriumbisulfitadduktes von Isophorondiisocyanat zugegeben.

Der slurry wird weiter bei 500 Upm insgesamt 70 Minuten bei 70 °C gerührt.

Es entsteht ein slurry mit sehr kleinen Kapseln mit Durchmessern zwischen 1-3 µm, die weitgehend zu kleinen Träubchen unter 10 µm Durchmesser agglomeriert sind.

Beispiel 26

270 g einer Schutzkolloidlösung, wie in Beispiel 1 a beschrieben, werden in einem Becherglas bei 75 °C vorgelegt und unter Rühren mit einem Laborrührer werden bei einer Drehzalhl von 500 Upm 30 g des bei 75 °C flüssigen Diphenylmethan-3,3'-dithiomethyl-4,4'-diamins zugegeben.

25 Sekunden nach Zugabe des Diamins werden 115 g einer klaren, auf 75 °C erwärmten Lösung aus 180 g Schutzkolloidlösung und 15 g eines pulvrigen Natriumbisulfitadduktes des Hexamethylendiisocyanates zugegeben. Die Drehzahl wird auf 700 Upm erhöht und insgesamt 120 Minuten bei 75 °C gerührt.

Es entsteht ein agglomeratfreier slurry mit polyamingefüllten Mikrokapseln mit Durchmessern zwischen 1-12 µm.

Beispiel 27

135 g einer Schutzkolloidlösung, wie in Beispiel 1 a beschrieben, werden in einem Becherglas bei 70 °C vorgelegt, und unter Rühren mit einem Laborrührer bei 500 Upm werden 15 g eines bei Raumtemperatur flüssigen Polyamins, welches aus einem Prepolymer mit 14,3 % NCO-Gruppen umgesetzt aus Hexamethylendiisocyanat und Dipropylenglykol hergestellt wurde, indem die endständigen NCO-Gruppen durch Hydrolyse in Aminogruppen überführt wurden (6-Amino-n-hexylcarbaminsäuredipropylenglykoldiester), zugegeben. Es entsteht eine grobteilige Öl-in-Wasser-Emulsion.

25 Sekunden nach Zugabe des Diamins werden 102,5 g einer auf 70 °C erwärmten klaren Lösung aus 90 g Schutzkolloidlösung und 12,5 g einer 40 %-igen wäßrigen Lösung des Natriumbisulfitadduktes von Isophorondiisocyanat zugegeben.

Der slurry wird weiter bei 500 Upm insgesamt 70 Minuten bei 70 °C gerührt.

Es entsteht ein slurry, welcher weitgehend zitronenförmige Kapseln mit rundem Kern — wie sie von der Mikrokapselherstellung durch Komplexkoazervation bekannt sind — enthält. Die Kapseln haben Durchmesser zwischen 9 und 230 µm.

Beispiel 28

270 g einer Schutzkolloidlösung, wie in Beispiel 1 a beschrieben, werden in einem Becherglas bei 98 °C vorgelegt, und unter Rühren mit einem Laborrührer werden bei einer Drehzahl von 500 Upm 30 g auf 98 °C erhitztes Polyamingemisch aus Diphenylmethan-3,5-diethyl-3',5'-diisopropyl-4,4'-diamin, Diphenylmethan-3,3',5,5'-tetraisopropyl-4,4'-diamin und Diphenylmethan-3,3',5,5'-tetraethyl-4,4'-diamin zugegeben.

25 Sekunden nach Zugabe des Diamins werden 193 g einer klaren, auf 98 °C erwärmten Lösung aus 180 g Schutzkolloidlösung und 13 g eines pulvrigen Natriumbisulfitadduktes des Hexamethylendiisocyanates zugegeben.

Die Drehzahl wird für 1 Minute auf 700 Upm erhöht und danach der slurry in einen 1-l-Dreihalskolben mit Rückflußkühler umgefüllt. In dem Kolben wird der slurry zum Sieden gebracht und bei dieser Temperatur 4,5 h mit 300 Upm gerührt.

Es entsteht ein slurry mit polyamingefüllten Mikrokapseln mit Durchmessern zwischen 1 und 13 µm. Ca. 5 % der Kapseln haben sich zu Agglomeraten bis 24 µm Durchmesser zusammengelagert.

Beispiel 29

10 g des nach Beispiel 14 erhaltenen Kapselpulvers werden mit 190 g eines auf Trimethylolpropan gestarteten Polyethers der OH-Zahl 35 mit mehr als 80 % primären OH-Gruppen unter intensivem Rühren gemischt. Die entstandene Dispersion wird anschließend mit 6 g $H_2O$, 2 g Diethanolamin, 0,5 g Diazabicyclooctan, 4 g Tris-2-chlorethylphosphat und 0,25 Zinn(II)-dioctoat gut vermischt. Nach guter Durchmischung werden 77,4 g Toluylendiisocyanat (Isomerengemisch : 80 % 2,4-, 20 % 2,6-Toluylendiisocyanat) unter schnellem Rühren zugesetzt und die schaumfähige Mischung in eine offene Form ausgegossen.

Nach einer Steigzeit von 83 sec. ist ein offenzelliger Weichschaumstoff entstanden. Der Schaumstoff wird anschließend 1 h bei 120 °C im Trockenschrank nachbehandelt. Es entsteht ein hochelastischer Weichschaumstoff mit guten mechanischen Eigenschaften.

**Patentansprüche**

1. Mikrokapseln mit hydrophobem Kernmaterial und Kapselwänden, die durch Reaktion wasserunlöslicher Polyamine mit wasserlöslichen Bisulfitaddukten von Polyisocyanaten entstanden sind.
2. Mikrokapseln nach Anspruch 1 mit einem Durchmesser von 0,2 bis 2 000 µm.
3. Mikrokapseln gemäß Anspruch 1, enthaltend einen Kapselwandanteil von 5 bis 64 %.
4. Mikrokapseln gemäß Anspruch 1 mit einem wasserunlöslichen Polyamin als Kernmaterial.
5. Verfahren zur Herstellung von Mikrokapseln gemäß Anspruch 1, dadurch gekennzeichnet, daß man eine Mischung aus hydrophobem Kernmaterial und wasserunlöslichen Polyaminen in Wasser oder gegebenenfalls in einer wäßrigen Schutzkolloidlösung bis auf die gewünschte Teilchengröße emulgiert, wasserlösliche Bisulfitaddukte von Polyisocyanaten in Form von Pulver oder wäßrigen Lösungen zugibt und das Gemisch bei Temperaturen von 1 bis 140 °C ausreagieren läßt.
6. Verfahren nach Anspruch 5, dadurch gekennzeichnet, daß das hydrophobe Kernmaterial ein wasserunlösliches Polyamin ist.
7. Verfahren gemäß Anspruch 5, dadurch gekennzeichnet, daß die wasserunlöslichen Bestandteile der Emulsion 0,5 bis 50 Gew.-% der Gesamtemulsion betragen.
8. Verwendung der Mikrokapseln gemäß Anspruch 1 bei der Herstellung von Reaktionsdurchschreibepapieren.
9. Verwendung der Mikrokapseln gemäß Anspruch 1 als Zusätze bei der Herstellung von Polymeren.
10. Verwendung der Mikrokapseln gemäß Anspruch 1 bei der Reaktivierung von Klebstoffen, als Toner für Kopiersysteme oder als absorbierende Systeme.

**Claims**

1. Microcapsules having a hydrophobic core material and capsule walls which have been formed by reacting water-insoluble polyamines with water-soluble bisulphite adducts of polyisocyanates.
2. Microcapsules according to Claim 1 having a diameter of 0.2 to 2,000 µm.
3. Microcapsules according to Claim 1, containing a capsule wall portion of 5 to 64 %.
4. Microcapsules according to Claim 1 having a water-insoluble polyamine as the core material.
5. Process for the production of microcapsules according to Claim 1, characterised in that a mixture of hydrophobic core material and water-insoluble polyamines is emulsified in water or optionally in an aqueous protective colloid solution until the required particle size is obtained, water-soluble bisulphite adducts of polyisocyanates are added in the form of powders or aqueous solutions and the mixture is allowed to react to completion at temperatures of 1 to 140 °C.

6. Process according to Claim 5, characterised in that the hydrophobic core material is a water-insoluble polyamine.

7. Process according to Claim 5, characterised in that the water-insoluble constituents of the emulsion comprise 0.5 to 50 % by weight of the total emulsion.

8. Use of the microcapsules according to Claim 1 in the production of reaction copying papers.

9. Use of the microcapsules according to Claim 1 as additives in the production of polymers.

10. Use of the microcapsules according to Claim 1 in the reactivation of adhesives, as toners for copying systems or as absorbing systems.

**Revendications**

1. Microcapsules comportant une matière hydrophobe centrale et des parois de capsules, que l'on obtient par réaction de polyamines insolubles dans l'eau avec des produits hydrosolubles d'addition de bisulfite sur des polyisocyanates.

2. Microcapsules selon la revendication 1, ayant un diamètre compris entre 0,2 et 2 000 µm.

3. Microcapsules selon la rèvendication 1, contenant une proportion de paroi de capsules de 5 à 64 %.

4. Microcapsules selon la revendication 1, comportant une polyamine insoluble dans l'eau comme matière centrale.

5. Procédé de production de microcapsules selon la revendication 1, caractérisé en ce qu'on émulsifie un mélange d'une matière hydrophobe centrale et de polyamines insolubles dans l'eau, dans de l'eau ou éventuellement dans une solution aqueuse de colloïde protecteur jusqu'à obtention de la grosseur voulue des particules, on ajoute un produit hydrosoluble d'additon de bisulfite sur des polyisocyanates, sous forme de poudre ou de solutions aqueuses, et on laisse réagir le mélange à des températures de 1 à 140 °C.

6. Procédé selon la revendication 5, caractérisé en ce que la matière hydrophobe centrale est une polyamine insoluble dans l'eau.

7. Procédé selon la revendication 5, caractérisé en ce que les constituants de l'émulsion insolubles dans l'eau représentent 0,5 à 50 % du poids de l'émulsion totale.

8. Utilisation de microcapsules selon la revendication 1, dans la production de papier pour transcription de copies par réaction.

9. Utilisation de microcapsules selon la revendication 1, comme additifs lors de la production de polymères.

10. Utilisation de microcapsules selon la revendication 1, pour la réactivation de colle, comme encre ou « toner » pour des dispositifs de copie ou comme systèmes absorbants.